**Europäisches Patentamt**

**European Patent Office**

**Office européen des brevets**

(19)

(11) Veröffentlichungsnummer: **0 231 437**
**B1**

(12)

# EUROPÄISCHE PATENTSCHRIFT

(45) Veröffentlichungstag der Patentschrift:
23.08.89

(21) Anmeldenummer: 86114762.7

(22) Anmeldetag: 23.10.86

(51) Int. Cl.⁴: **B 01 J 37/00 //**
**B01J23/74, B01J23/26**

(54) **Verfahren zur Herstellung von Katalysatorformkörpern durch Pressen aus körnigem Katalysatormaterial, z. B. Eisen-, Chrom- oder dergleichen Erz, unter Verwendung eines Bindemittels.**

(30) Priorität: 19.12.85 DE 3544913

(43) Veröffentlichungstag der Anmeldung:
12.08.87 Patentblatt 87/33

(45) Bekanntmachung des Hinweises auf die Patenterteilung:
23.08.89 Patentblatt 89/34

(84) Benannte Vertragsstaaten:
AT BE CH DE ES FR GB IT LI LU NL SE

(56) Entgegenhaltungen:
FR-A-1 597 034
US-A-4 115 324
US-A-4 138 368

(73) Patentinhaber: **DIDIER- WERKE AG, Lessingstrasse 16- 18, D-6200 Wiesbaden (DE)**

(72) Erfinder: **Grimm, Daniel, Hauptstrasse 10, D-6229 Schlangenbad- Bärstadt (DE)**
Erfinder: **Kainer, Hartmut,Dr., Sauerbruchstrasse 1a, D-6200 Wiesbaden 12 (DE)**
Erfinder: **Levkov, Blagoje, Dr., Rudolf- Vogt- Strasse 41, D-6200 Wiesbaden (DE)**

(74) Vertreter: **Brückner, Raimund, Dipl.- Ing., c/o Didier- Werke AG Lessingstrasse 16- 18, D-6200 Wiesbaden (DE)**

## Beschreibung

Die Erfindung bezieht sich auf ein Verfahren zur Herstellung von Katalysatorformkörpern durch Pressen aus körnigem Katalysatormaterial, vorzugsweise Eisen-, Chrom- oder dergleichen Erz, unter Verwendung eines Bindemittels.

Auf der Suche nach einem geeigneten Bindemittel für Katalysatorformkörper hat sich $H_2SO_4$ als brauchbar erwiesen. Nachteilig an $H_2SO_4$ ist jedoch die Neigung zur Hygroskopie an der Luft. Dadurch werden die Katalysatorformkörper weich. Man hat daher von der Verwendung der $H_2SO_4$ bisher möglichst abgesehen.

Aufgabe der vorliegenden Erfindung ist es, ein Verfahren zur Herstellung von Katalysatorformkörpern vorzuschlagen, bei welchem $H_2SO_4$ als Bindemittel eingesetzt werden kann.

Diese Aufgabe wird erfindungsgemäß dadurch gelöst, daß man das körnige Katalysatormaterial in einem Temperaturbereich von etwa 250 bis 1000°C thermisch vorbehandelt, bevor man es mit verdünnter $H_2SO_4$ als Bindemittel vermischt.

Es hat sich herausgestellt, daß nach einem derartigen Verfahren hergestellte Katalysatorformkörper der üblichen Aufweichung durch Hygroskopie der $H_2SO_4$ nicht mehr unterliegen bzw. die Neigung zur Hygroskopie stark verringert wird. Dies könnte möglicherweise darauf zurückzuführen sein, daß man durch die thermische Vorbehandlung des Katalysatormaterials eine höhere Ausgangsporosität schafft.

Eine weitere Verbesserung der Erhärtung des Katalysatorformkörpers kann man erzielen, wenn man die thermische Vorbehandlung unter einer Wasserdampf-, $CO_2$ und/oder $SO_2/SO_3$-Atmosphäre ausführt, und zwar entweder bei Normaldruck oder bei erhöhten Drücken.

Indem man das mit Bindemittel versetzte körnige Material bzw. die Katalysatorformkörper einer Temperatur bei Luftatmosphäre aussetzt, kann man die Wirksamkeit der Katalysatorformkörper durch offene reagible Berührungsflächen weiter verbessern. Diese Temperung führt man bei einer Temperatur zwischen etwa 350 und 700°C, vorzugsweise bei etwa 450°C aus, und zwar für wenigstens drei Stunden, vorzugsweise etwa fünf Stunden.

Man kann das mit Bindemittel versetzte körnige Material bzw. die Katalysatorformkörper z. B. unter erhöhter Temperatur und erhöhtem Druck einer Wasserdampf- und/oder $SO_2/SO_3$-Atmosphäre aussetzen, um eine Nachhärtung der Katalysatorformkörper zu erreichen. Überraschenderweise wurde festgestellt, daß dieser Effekt der Nachhärtung wesentlich verstärkt wird, wenn man diese Nachhärtung in reduzierender Atmosphäre durchführt, indem man das mit Bindemittel versetzte körnige Material bzw. die Katalysatorformkörper einer Co- und/oder $NH_3$-Atmosphäre bei erhöhter Temperatur aussetzt. Dies kann ausschließlich oder auch in Verbindung mit der Nachhärtung in Wasserdampf- und/oder $SO_2/SO_3$-Atmosphäre vorgenommen werden. Diese Nachhärtung kann man auch im Einsatz selbst vornehmen, indem man die Katalysatorformkörper im Reaktor einem Rauchgasstrom mit $SO_2$-, $SO_3$- und $H_2O$-Anteilen aussetzt. Hierdurch wird auch die Wasserbeständigkeit der Katalysatorformkörper verbessert.

Wenn man nach der Wasserdampfbehandlung erneut tempert, kann die Festigkeit der Katalysatorformkörper weiter gesteigert werden.

Ein weiteres Erfindungsmerkmal besteht darin, dem körnigen Katalysatormaterial Metalloxide und/oder entsprechende Metallhydroxide, vorzugsweise MgO, $Mg(OH)_2$, $Cr_2O_3$, $Al_2O_3$, $Al_2(OH)_3$, $TiO_2$, CaO, $Ca(OH)_2$, BaO, $Ba(OH)_2$, SrO, $Sr(OH)_2$, CuO, $WO_3$ und/oder $V_2O_5$ oder natürliche Oxidgemische, vorzugsweise Tone, Schamotte, Chromerz, Magnesit, Dolomit, Bauxit beizumischen. Hierdurch kann eine festigkeitsfördernde Verbindung mit $SO_2$ geschaffen werden.

Es hat sich ferner gezeigt, daß geringe Anteile einer Phosphatverbindung festigkeitserhöhend wirken. Bei einem derartigen Säuregemisch von $H_2SO_4$ und vorzugsweise $H_3PO_4$ oder $(NaPO_3)_n$ fördert $H_2SO_4$ im wesentlichen die Aktivität des Katalysatormaterials und die Phosphatverbindung im wesentlichen die Festigkeitseigenschaften der Katalysatorformkörper.

Es ist ferner von Vorteil, wenn das Bindemittel auch Sulfate enthält. Dadurch kann die Aktivität des Katalysators weiter erhöht werden.

Die Festigkeit der Katalysatorformkörper ist besonders gut, wenn ein körniges Material im Korngrößenbereich < 2 mm verwendet wird.

Zur Verbesserung der Biegesteifigkeit und Flexibilität der Katalysatorformkörper wird mit der Erfindung weiter vorgeschlagen, dem körnigen Material Fasern einzulagern.

Die Katalysatorformkörper stellt man nach der Erfindung zweckmäßigerweise dadurch her, daß man die Mischung aus dem körnigen Material und dem Bindemittel und gegebenenfalls den Fasern vor dem Tempern bei einem Druck zwischen etwa 10 und 100 $N/mm^2$ zu dem Formkörpern verpreßt.

Fernerhin wurde gefunden, daß man freie $H_2SO_4$ durch Besprühen oder Tränken der gepreßten Katalysatorformkörper mit BaCl, SrCl, CaCl, CuCl oder dergleichen Reaktanden binden kann.

Nachfolgend wird das erfindungsgemäße Verfahren anhand einiger Ausführungsbeispiele näher erläutert:

## Beispiel 1

Es wurde eine Grundmischung aus 90 % Eisenerz 0 bis 0,5 mm Korngröße und 10 % Eisenerz 6300 Blaine ($cm^2/g$) mit 35 ml $H_2SO_4$ 50 %-ig/kg Grundmaterial hergestellt. Das Erz wurde fünf Stunden lang bei 450°C vorgetempert. Nach einer Temperung der aus der Grundmischung unter einem Preßdruck von 50 $N/mm^2$

hergestellten Platten mit einer Plattensstärke von 4,7 bis 4,8 mm wurde eine Wasseraufnahme von 0,70 Gew.-%, eine Kaltbiegefestigkeit trocken von 6,1 N/mm² und eine Kaltbiegefestigkeit feucht (nach Lagerung in einem Klimaschrank bei 30°C und 95 % Luftfeuchte während sechs Stunden) von 3,4 N/mm² gemessen.

**Beispiel 2**

Nach einer Vortemperung einer Grundmischung von 90 % Eisenerz 0 bis 0,5 mm und 10 % Eisenerz 6300 Blaine (cm²/g) (vier Stunden gemahlen) für fünf Stunden bei 450°C erfolgte eine Vermischung mit 35 ml $H_2SO_4$ 80 %-ig pro kg Grundmischung. Die daraus unter den im Ausführungsbeispiel 1 genannten Bedingungen hergestellten Katalysatorplatten wurden bei 450°C fünf Stunden lang nachgehärtet. Die Rohdichte der getemperten Platten betrug etwa 3,25 g/cm³. Es wurde eine Wasseraufnahme von 1,94 Gew.-%, eine Kaltbiegefestigkeit trocken von 7,8 N/mm² und eine Kaltbiegefestigkeit feucht (unter den im Ausführungsbeispiel 1 genannten Bedingungen) von < 3,0 N/mm² festgestellt.
Untersuchungen bezüglich der Temperzeit der gepreßten Katalysatorformkörper ergaben, daß oberhalb von fünf Stunden Temperung bei etwa 450°C keine wesentliche Veränderung der Wasseraufnahme und der Biegefestigkeit mit sich brachte.

**Beispiel 3**

Es wurde eine Grundmischung aus Eisenerz (25 % Feinstanteil, 30 % < 0,09 mm, 25 % 0,09 bis 2 mm und 20 % 0,2 bis 0,3 mm Korngröße) mit 35 ml pro kg Trockenmasse $H_2SO_4$ 75 %-ig einerseits und 35 ml pro kg Trockenmasse $H_3PO_4$ 70 %-ig hergestellt. Die Mischungen ließ man leicht abbinden und mischte dann die $H_2SO_4$-Mischung mit der $H_3PO_4$-Mischung im Verhältnis 2/3 : 1/3. Aus dieser Mischung wurden in gleicher Weise Katalysatorplatten hergestellt wie aus Mischungen mit einem Bindemittel ohne $H_3PO_4$. Ein Vergleich der Biegefestigkeiten beider Platten ergab einen deutlich positiven Einfluß der $H_3PO_4$-Bindung.

**Patentansprüche**

1. Verfahren zur Herstellung von Katalysatorformkörpern durch Pressen aus körnigem Katalysatormaterial, vorzugsweise Eisen-, Chrom- oder dergleichen Erz, unter Verwendung eines Bindemittels, dadurch gekennzeichnet, daß man das körnige Katalysatormaterial in einem Temperaturbereich von etwa 250 bis 1000°C thermisch vorbehandelt, bevor man es mit verdünnter und/oder konzentrierter $H_2SO_4$ als Bindemittel vermischt.

2. Verfahren nach Anspruch 1, dadurch gekennzeichnet, daß man die thermische Vorbehandlung unter einer Wasserdampf, $CO_2$- und/oder $SO_2/SO_3$-Atmosphäre ausführt.

3. Verfahren nach Anspruch 1 oder 2, dadurch gekennzeichnet, daß man das mit Bindemittel versetzte körnige Material einer Temperung bei Luftatmosphäre oder Rauchgasatmosphäre (oxidierender oder reduzierender Atmosphäre, auch in Anwesenheit von $NH_3$, CO, $CH_4$, $H_2$ aussetzt.

4. Verfahren nach Anspruch 3, dadurch gekennzeichnet, daß man die Temperung bei einer Temperatur zwischen etwa 350 und 700°C, vorzugsweise bei etwa 450°C, ausführt.

5. Verfahren nach Anspruch 3 oder 4, dadurch gekennzeichnet, daß man die Temperung für wenigstens drei Stunden ausführt.

6. Verfahren nach einem der Ansprüche 1 bis 5, dadurch gekennzeichnet, daß man das mit Bindemittel versetzte körnige Material unter erhöhter Temperatur und erhöhtem Druck einer Wasserdampf- und/oder $SO_2/SO_3$-Atmosphäre aussetzt.

7. Verfahren nach Anspruch 6, dadurch gekennzeichnet, daß man nach der Wasserdampfbehandlung nochmals tempert.

8. Verfahren nach einem der Ansprüche 1 bis 7, dadurch gekennzeichnet, daß man das mit Bindemittel versetzte körnige Material in reduzierender Atmosphäre einer höheren Temperatur aussetzt, indem man das Material mit CO- und/oder $NH_3$-Gas umspült.

9. Verfahren nach einem der Ansprüche 1 bis 8, dadurch gekennzeichnet, daß man dem körnigen Katalysatormaterial Metalloxid und/oder entsprechendes Metallhydroxid, vorzugsweise MgO, $Mg(OH)_2$, $Cr_2O_3$, $Al_2O_3$, $Al_2(OH)_3$, $TiO_2$, CaO, $Ca(OH)_2$, BaO, $Ba(OH)_2$, SrO, $Sr(OH)_2$, CuO, $WO_3$ und/oder $V_2O_5$ oder natürliche Oxidgemische, vorzugsweise Tone, Schamotte, Chromerz, Magnesit, Dolomit, Bauxit beimischt.

10. Verfahren nach einem der Ansprüche 1 bis 9, dadurch gekennzeichnet, daß man ein Bindemittel verwendet, welches außer $H_2SO_4$ auch eine Phosphatverbindung enthält, vorzugsweise bis zu 10 % $P_2O_5$.

11. Verfahren nach einem der Ansprüche 1 bis 10, dadurch gekennzeichnet, daß man ein Sulfate enthaltendes Bindemittel verwendet.

12. Verfahren nach einem der Ansprüche 1 bis 11, dadurch gekennzeichnet, daß man ein körniges Material im Korngrößenbereich < 2 mm verwendet.

13. Verfahren nach einem der Ansprüche 1 bis 12, dadurch gekennzeichnet, daß man das körnige Material mittels eingelagerter Fasern versetzt.

14. Verfahren nach einem der Ansprüche 1 bis 13, dadurch gekennzeichnet, daß man die Mischung aus dem körnigen Material und dem Bindemittel und gegebenenfalls den Fasern vor dem Tempern bei einem Druck zwischen etwa 10 und 100 N/mm² zu dem Katalysatorformkörper verpreßt.

15. Verfahren nach einem der Ansprüche 1 bis 14, dadurch gekennzeichnet, daß man die gepreßten Katalysatorformkörper mit BaCl, SrCl, CaCl oder CuCl besprüht oder tränkt.

## Claims

1. Method of manufacturing shaped catalyst bodies by pressing granular catalyst material, preferably iron ore, chromium ore or the like, whilst using a bonding agent, characterized in that the granular catalyst material is thermally pre-treated in a temperature range of about 250 to 1000° C before it is mixed with diluted and/or concentrated $H_2SO_4$ as the bonding agent.

2. Method as claimed in claim 1, characterized in that the thermal pre-treatment is performed under an atmosphere of steam, $CO_2$ and/or $SO_2/SO_3$.

3. Method as claimed in claim 1 or 2, characterized in that the granular material treated with bonding agent is subjected to a tempering in an air atmosphere or flue gas atmosphere (oxidising or reducing atmosphere, also in the presence of $NH_3$, CO, $CH_4$, $H_2$).

4. Method as claimed in claim 3, characterized in that the tempering is performed at a temperature of between about 350 and 700° C, preferably at about 450° C.

5. Method as claimed in claim 3 or 4, characterized in that the tempering is performed for at least three hours.

6. Method as claimed in one of claims 1 to 5, characterised in that the granular material treated with bonding agent is subjected to an atmosphere of steam and/or $SO_2/SO_3$ under increased temperature and increased pressure.

7. Method as claimed in claim 6, characterized in that a further tempering is performed after the steam treatment.

8. Method as claimed in one of claims 1 to 7, characterised in that the granular material treated with bonding agent is subjected to an increased temperature in a reducing atmosphere whilst CO and/or $NH_3$ gas flows around the material.

9. Method as claimed in one of claims 1 to 8, characterized in that metal oxide and/or corresponding metal hydroxide, preferably MgO, $Mg(OH)_2$, $Cr_2O_3$, $Al_2O_3$, $Al(OH)_3$, $TiO_2$, CaO, $Ca(OH)_2$, BaO, $Ba(OH)_2$, SrO, $Sr(OH)_2$, CuO, $WO_3$ and/or $V_2O_5$ or natural oxide mixtures, preferably clays, fire clay, chromium ore, magnesite, dolomite, bauxite, are mixed into the granular catalyst material.

10. Method as claimed in one of claims 1 to 9, characterized in that a bonding agent is used which in addition to $H_2SO_4$ also contains a phosphate compound, preferably up to 10 % $P_2O_5$.

11. Method as claimed in one of claims 1 to 10, characterized in that a bonding agent which contains a sulphate is used.

12. Method as claimed in one of claims 1 to 11, characterized in that a granular material in the grain size range < 2 mm is used.

13. Method as claimed in one of claims 1 to 12, characterized in that the granular material is mixed with incorporated fibres.

14. Method as claimed in one of claims 1 to 13, characterised in that the mixture of the granular material and the bonding agent and optionally the fibres is pressed into the shaped catalyst bodies at a pressure between about 10 and 100 $N/mm^2$ before the tempering.

15. Method as claimed in one of claims 1 to 14, characterized in that the pressed shaped catalyst bodies are sprayed or impregnated with BaCl, SrCl, CaCl or CuCl.

## Revendications

1. Procédé de fabrication de corps catalyseurs moulés par compression, à partir de matériaux catalytiques granulaires, de préférence des minerais de fer, de chrome ou autres, avec utilisation d'un liant, caractérisé en ce que l'on soumet le matériau catalytique granulaire à un traitement thermique préalable, dans une plage de températures d'environ 250 à 1000° C, avant de le mélanger avec, comme liant, $H_2SO_4$ dilué et/ou concentré.

2. Procédé selon la revendication 1, caractérisé en ce que l'on effectue le traitement thermique préalable sous atmosphère de vapeur d'eau, de $CO_2$ et/ou de $SO_2/SO_3$.

3. Procédé selon la revendication 1 ou 2, caractérisé en ce que l'on soumet le matériau granulaire additionné de liant à un traitement thermique à l'air atmosphérique ou sous atmosphère de gaz de fumées (sous atmosphère oxydante ou réductrice, également en présence de $NH_3$, CO, $CH_4$, $H_2$).

4. Procédé selon la revendication 3, caractérisé en ce que l'on effectue le traitement thermique à une température comprise entre 350 et 700° C, de préférence à environ 450° C.

5. Procédé selon la revendication 3 ou 4, caractérisé en ce que l'on effectue le traitement thermique pendant au moins 3 heures.

6. Procédé selon l'une des revendications 1 à 5, caractérisé en ce que l'on expose le matériau granulaire additionné de liant, sous température et pression élevées, à une atmosphère de vapeur d'eau et/ou de $SO_2/SO_3$.

7. Procédé selon la revendication 6, caractérisé en ce qu'après le traitement à la vapeur d'eau, on effectue encore un traitement thermique.

8. Procédé selon l'une quelconque des revendications 1 à 7, caractérisé en ce que l'on expose le matériau granulaire additionné de liant, sous atmosphère réductrice, à une température élevée, en faisant passer tout autour du matériau un courant de gaz CO et/ou $NH_3$.

9. Procédé selon l'une quelconque des revendications 1 à 8, caractérisé en ce que l'on mélange le matériau granulaire catalytique avec un oxyde métallique et/ou l'hydroxyde métallique correspondent, de préférence MgO, $Mg(OH)_2$, $Cr_2O_3$, $Al_2O_3$, $Al(OH)_3$, $TiO_2$, CaO, $Ca(OH)_2$, BaO, $Ba(OH)_2$, SrO, $Sr(OH)_2$, CuO, $WO_3$ et/ou $V_2O_5$, ou un mélange d'oxydes naturels, de préférence l'argile, la chamotte, la chromite, la magnésite, la dolomite, le bauxite.

10. Procédé selon l'une quelconque des revendications 1 à 9, caractérisé en ce que l'on utilise un liant qui contient, en plus de $H_2SO_4$, également un composé phosphate, de préférence jusqu'à 10 % de $P_2O_5$.

11. Procédé selon l'une quelconque des revendications 1 à 10, caractérisé en ce que l'on utilise un liant contenant un sulfate.

12. Procédé selon l'une quelconque des revendications 1 à 11, caractérisé en ce que l'on utilise un matériau granulaire dont les grains ont une taille < 2 mm.

13. Procédé selon l'une quelconque des revendications 1 à 12, caractérisé en ce que l'on ajoute et incorpore des fibres au matériau granulaire.

14. Procédé selon l'une quelconque des revendications 1 à 13, caractérisé en ce que l'on comprime le mélange constitué par le matériau granulaire et le liant et éventuellement les fibres, avant le traitement thermique, sous une pression comprise entre environ 10 et 100 $N/mm^2$, pour en faire un corps moulé catalyseur.

15. Procédé selon l'une quelconque des revendications 1 à 14, caractérisé en ce que l'on pulvérise ou imprègne le corps catalyseur comprimé avec BaCl, SrCl, CaCl ou CuCl.